# EUROPÄISCHE PATENTANMELDUNG

(11) **EP 4 571 507 A1**
(43) Veröffentlichungstag der Anmeldung: **18.06.2025**
(21) Anmeldenummer: 23216385.7
(22) Anmeldetag: 13.12.2023
(51) Int. Cl.: G06F 9/50

(54) **VERFAHREN, VORRICHTUNG UND SYSTEM ZUR ENERGIEEFFIZIENTEN AUSFÜHRUNG VON DIENSTEN IN EINER CLOUD**

(71) Anmelder: Siemens Aktiengesellschaft, 80333 München (DE)
(72) Erfinder: Afanasyev, Ilija, 76131 Karlsruhe (DE); Anderer, Rouven, 76872 Steinweiler (DE); Oppelt, Mathias, 90427 Nürnberg (DE); Pernozzoli, Arno, 91091 Grossenseebach (DE)
(74) Vertreter: Siemens Patent Attorneys

(57) **Zusammenfassung**

Die vorgeschlagene Lösung zielt darauf ab, die Lastverteilung und die geplante Ausführung von Diensten in der Cloud auf die Prinzipien des _{"}Green Engineering" auszudehnen. Standardisierte APIs, Algorithmen und unterstützende Dienste werden definiert, um einen Lastausgleich und eine Planung nach den oben aufgeführten, sogenannten "grünen" Effizienzkriterien zu realisieren. Die Idee ist, Anbieter-Dienstinstanzen (Provider-Service-Instanzen) nach ihrer energetischen Effizienz auszuwählen, anstatt nur Latenz und Verfügbarkeit auszugleichen. Darüber hinaus können Kunden eine verzögerte Ausführung der erforderlichen Operation ermöglichen, indem sie ein Ausführungsprofil bereitstellen, beispielsweise wenn die Ausführung nicht zeitkritisch ist und verschoben werden kann, wie ein Backup oder andere nicht zeitkritische Hintergrunddienste

## Beschreibung

Unter "Green IT" versteht man alle Aktivitäten, welche die Nutzung von IKT über deren gesamten Lebenszyklus hinweg umwelt- und ressourcenschonend gestalten.

Prinzipien des "Green Software Engineering" definieren eine Reihe von Kompetenzen, die benötigt werden, um energieffiziente, nachhaltige Softwareanwendungen zu definieren, zu erstellen und auszuführen (siehe https://principles.green):
1. Kohlenstoff wird häufig als allgemeiner Begriff für die Auswirkungen aller Arten von Emissionen (CO2 und weitere Treibhausgase) und Aktivitäten auf die globale Erwärmung verwendet. CO2eq/CO2-eq/CO2e, was für Kohlenstoffäquivalent steht, ist ein Begriff, mit dem diese Auswirkungen gemessen werden.: Erstellung von Anwendungen, die kohlenstoffeffizient sind.
2. Engergieeffizienz: Jede Software, von den Anwendungen auf Mobiltelefonen bis hin zum Training von Machine-Learning-Modellen in Rechenzentren, verbraucht Strom. Eine der besten Möglichkeiten zur Verringerung des Stromverbrauchs und der daraus resultierenden Kohlendioxidemissionen von Software besteht darin, die Anwendungen energieeffizienter zu gestalten.
3. Kohlenstoffintensität / CO2-Intensität: Nicht jeder Strom wird auf dieselbe Weise erzeugt. An verschiedenen Orten und zu verschiedenen Zeiten wird Strom aus verschiedenen Quellen mit unterschiedlichen Kohlenstoffemissionen erzeugt. Einige Quellen, wie Wind-, Solar- oder Wasserkraft, sind saubere, erneuerbare Quellen, die wenig Kohlenstoff ausstoßen. Kohlenstoffbewusstsein bedeutet, mehr Energie aus kohlenstoffarmen Quellen zu verwenden, und weniger, wenn Energie aus kohlenstoffreichen Quellen stammt.
4. Gebundener Kohlenstoff / "Embodied Carbon": Treibhausgasemissionen, die während des gesamten Lebenszyklus eines Materials (oder Gebäudes) entstehen. Embodied Carbon umfasst bspw. die Herstellung von Materialien, Konstruktion eines Gebäudes sowie die Entsorgung von Materialien. Bei der Berechnung der Werte für Computer, auf denen Software läuft, muss sowohl die mit dem Betrieb des Computers verbundene als auch die im Computers selber erzeugte Emission berücksichtigt werden. Ein Ziel ist daher die Erstellung von Anwendungen, die hardwareeffizient sind.
   Dazu gehören auch
5. Energieproportionalität: die Maximierung der Energieeffizienz von Hardware, und
6. Vernetzung: Reduzierung der Datenmenge und der Entfernung, die sie über das Netzwerk zurücklegen muss. Dies ist beispielsweise bei Cloud-Anwendungen oder KI-Modellen eine große Herausforderung.
7. Nachfragesteuerung: die Erstellung von kohlenstoffbewussten Anwendungen.
8. Messung & Optimierung: Konzentrierung auf schrittweise Optimierungen, die die Gesamtkohlenstoffeffizienz erhöhen.

Seit einiger Zeit gibt es eine Tendenz, neue Rechenzentren in Regionen zu bauen, in denen Energie kostengünstig zur Verfügung steht, beispielsweise neben existierende Windparks. Weiterhin werden zunehmend auch in nördlichen Regionen (z. B. Skandinavien) neue Rechenzentren gebaut, wo die Kühlung, die eine der größten Energieanforderungen beim Betrieb eines Rechenzentrums ist, aufgrund der äußeren Gegebenheiten nahezu kostenlos erfolgen kann. Die Verfügbarkeit von Energie mit niedriger Kohlenstoffintensität ist ebenfalls ein regionaler Treiber. Wo die Stromerzeugung und -speicherung aus Wasserkraft zur Verfügung steht, um stark schwankende Wind- oder Solarenergie zu bewältigen, und die zuverlässige Grundlast beispielsweise durch Kernkraft mit nahezu null Kohlenstoffintensität (aber anderen Nachteilen) bereitgestellt wird, können Rechenzentren mit einem hohen Maß an Nachhaltigkeit betrieben werden. Da staatliche Vorschriften einen zunehmend nachhaltigen Betrieb von Cloud-Anwendungen vorschreiben, ist es absolut sinnvoll, die Last auf Regionen mit niedriger Kohlenstoffintensität zu verteilen, auch wenn Latenz oder Leistung ein Problem für die Leistung einer Cloud-Lösung darstellen können.

Cloud Computing bezeichnet im Allgemeinen das dynamisch an den Bedarf angepasste Anbieten, Nutzen und Abrechnen von IT-Dienstleistungen in einem Netz auf einen geteilten Pool von regional verteilten, konfigurierbaren Rechnerressourcen. Angebot und Nutzung dieser Dienstleistungen und Ressourcen erfolgen dabei ausschließlich über definierte technische Schnittstellen und Protokolle. Die Spannbreite der im Rahmen von Cloud Computing angebotenen Dienstleistungen umfasst das komplette Spektrum der Informationstechnik und beinhaltet unter anderem Infrastruktur (z. B. Rechenleistung, Speicherplatz), Plattformen und Software. Auch für Industrieanwendungen wird Cloud Computing immer wichtiger.

In der Datenverarbeitung ist weiterhin das Konzept des "Load Balancing" bekannt. Dabei handelt es sich um einen Lastenausgleich Prozess, bei dem eine Reihe von Aufgaben auf eine Reihe von Ressourcen, beispielsweise Recheneinheiten, verteilt werden, mit dem Ziel, die gesamte Verarbeitung effizienter zu gestalten. In Cloud-Umgebungen können Dienste beispielsweise mehrmals und in verschiedenen Regionen instanziiert werden, um eine höhere Effizienz und geringe Wartezeiten bei der Bearbeitung von Anforderungen von Clients zu gewährleisten. Ein Lastverteilungsalgorithmus versucht immer, ein bestimmtes Problem zu lösen. Unter anderen sollen die Art der zu lösenden Aufgaben, die algorithmische Komplexität, die Hardware-Architektur sowie die Fehlertoleranz berücksichtigt werden.

Heute gibt es noch keine Lösung, die die oben beschriebenen Nachhaltigkeitsaspekte bei der Ausführung von Dienstleistungen in der Datenverarbeitung dynamisch berücksichtigt.

Es ist daher Aufgabe der Erfindung, eine Lösung für das oben aufgeführte Problem anzugeben. Die Lösung wird vorgegeben durch den Gegenstand der unabhängigen Patentansprüche.

Die Aufgabe wird gelöst durch die Gegenstände der unabhängigen Patentansprüche, durch ein Verfahren, ein Computerprogrammprodukt, einen Lastverteiler und ein System.

Weitere Ausführungsformen sind in den Unteransprüchen formuliert.

Die im Folgenden vorgeschlagene Lösung zielt darauf ab, die Lastverteilung und die geplante Ausführung von Diensten auf die Prinzipien des "Green Engineering" auszudehnen. Standardisierte APIs, Algorithmen und unterstützende Dienste werden definiert, um einen Lastausgleich und eine Planung nach den oben aufgeführten, sogenannten "grünen" Effizienzkriterien zu realisieren. Die Idee ist, Anbieter-Dienstinstanzen (Provider-Service-Instanzen) nach ihrer energetischen Effizienz auszuwählen, anstatt nur Latenz und Verfügbarkeit auszugleichen. Darüber hinaus können Kunden eine verzögerte Ausführung der erforderlichen Operation ermöglichen, indem sie ein Ausführungsprofil bereitstellen, beispielsweise wenn die Ausführung nicht zeitkritisch ist und verschoben werden kann, wie ein Backup oder andere nicht zeitkritische Hintergrunddienste.

Das Verfahren zur energieeffizienten Ausführung eines Dienstes in einem Netz auf einen geteilten Pool von regional verteilten, konfigurierbaren Rechnerressourcen, gesteuert durch eine Lastverteilungsvorrichtung umfasst folgende Schritte:
a) Empfang einer profilierten Diensteanfrage zur Durchführung des Dienstes
b) Abfrage von zur Verfügung stehenden, und für die Ausführung der Diensteanfrage geeigneten, Diensteinstanzen in dem Pool von Rechnerressourcen, und deren zugehörigen Dienst-Energieprofilen, von einem Emissionsabschätzer
c) basierend auf der profilierten Diensteanfrage, unter Berücksichtigung der ermittelten Dienst-Energieprofile, Berechnung des Energieverbrauchs der Dienstinstanz, festgelegt durch Zeit und Ort der in der Diensteanfrage festgelegten Ausführung des Dienstes und Ermittlung der Ausführung mit einem minimalem Energieverbrauch,
d) Senden eines Ausführungsauftrag zu der im Schritt c ermittelten Dienstinstanz an einen Scheduler mit den aus den Dienst-Energieprofile gewonnenen Informationen,
e) Empfang eines Ausführungsauftrags von dem Scheduler, welcher Informationen zur Ausführung der so ausgewählten regionalen Dienstinstanz und zur Zeit der Ausführung beinhaltet zum ermittelten Ausführungszeitpunkt, und
f) Senden des Ausführungsauftrags zur Ausführung an die zur Ausführung ausgewählten Dienstinstanz.

Im Allgemeinen basiert ein Lastenausgleich auf der Optimierung der Leistung und Latenz von Softwareanwendungen und - diensten. Darüber hinaus ist die Auswahl des richtigen Zeitpunkts oder der richtigen Ausführungsregion ein manueller Prozess, der manchmal von Betriebskostenmodellen des zugrunde liegenden Cloud-Angebots gesteuert wird, aber hauptsächlich von den Anforderungen an Leistung und Reaktionszeit.

Die zuvor genannten "grünen" Prinzipien definieren allgemeine Regeln und Leitlinien für die Realisierung nachhaltiger Softwaresysteme, ohne technische Details wie Softwaredienste, APIs und Algorithmen zu spezifizieren. Auch Hyperscaler, also große Cloud-Serviceanbieter, die Services wie Computing und Storage auf Unternehmensniveau anbieten können, beispielsweise Microsoft Azure und Amazon AWS, setzen zunehmend auf Nachhaltigkeit in ihren Angeboten.

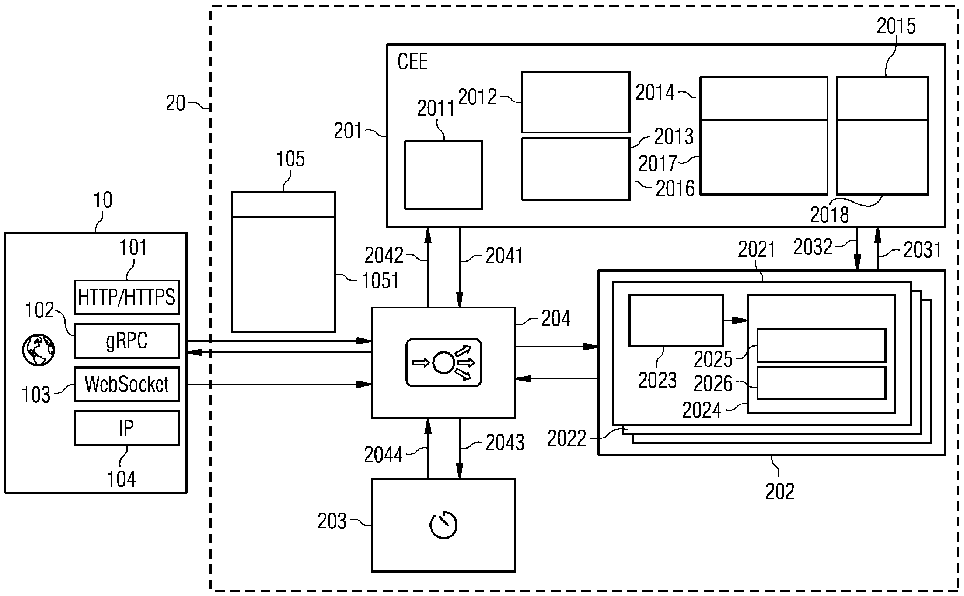

Die Erfindung wird in einer Ausführungsform im Folgenden durch die einzige Figur näher erläutert.

Das vorgestellte Konzept basiert auf den folgenden Modulen:
1. Bereitstellung eines Lastverteilers (Green Load Balancer) 204, der eine geeignete Instanz der Dienstleistung entsprechend von gewichteten Ansprüchen (Leistung, Kosten, Latenz, CO2 Intensität) des Anforderers (Requester) auswählt. Lastausgleich ist der Prozess der Verteilung einer Reihe von Aufgaben auf eine Reihe von Ressourcen (Recheneinheiten) mit dem Ziel, deren Gesamtverarbeitung effizienter zu gestalten. Der Lastverteiler fügt der Verteilungsstrategie Nachhaltigkeitsaspekte hinzu, indem es eine Auswahl von Ressourcen unter Berücksichtigung der CO2-intensität einer Aufgabenausführung bereitstellt.
2. Bereitstellung eines Schedulers, 203 auch als Ausführungs-Planer bekannt, der eine Funktion auf einer geeigneten Instanz des Dienstes gemäß den gewichteten Ansprüchen (Leistung, Kosten, Zeitbereich, Kohlenstoffintensität) des Anforderers ausführt.
3. Bereitstellung von Energieprofil-Diensten 2024 auf den Ausführungsknoten 2021, 2022, der einzelnen Dienste, Bereitstellung der aktuellen Last und des Verbrauchs der einzelnen Dienste.
4. Bereitstellung einer Reihe von Diensten zur Emissionsabschätzung (201, CEE: Cloud Emission Estimator), um die erforderlichen Parameter (Last, Energieverbrauch, Kohlenstoffintensität, ...) einzelner Dienste zu liefern, regionale Profile über Energieerzeugung und Kohlenstoffintensität zu sammeln und eine Schätzung des Ressourcenverbrauchs in Abhängigkeit von der Uhrzeit (des Tages) und der Region, in der eine Cloud-Ressource läuft, bereitzustellen.

Der Cloud Emissionsabschätzer (CEE Emission Estimator) ist eine Anwendung zur Umwandlung der CPU- und Speichernutzung in der Cloud sowie des Speicher- und Netzwerkverkehrs in CO2-Schätzungen. Der Emissionsabschätzer kann auf einem neutralen Datenanbieter basieren, beispielsweise auf www.climatiq.io, um Verzerrungen durch Cloud-Anbieter zu vermeiden. Climatiq liefert Daten, die dem Greenhouse Gas Protocol https://ghgprotocol.org/ entsprechen, und nutzt eine Vielzahl von Quellen. Die Standards bieten Unternehmen, Behörden und anderen Einrichtungen einen Rahmen, um ihre Treibhausgasemissionen in einer Weise zu messen und zu melden, die ihren Aufgaben und Zielen entspricht.
5. Bereitstellung einer Datenstruktur zur Definition des Effizienzprofils eines Cloud-basierten Dienstes unter Berücksichtigung von Last, Latenz und Kohlenstoffintensität sowie Betriebskosten.
6. Bereitstellung einer Datenstruktur für einen profilierten Ausführungsantrag, einschließlich gewichteter Ansprüche auf Antwortzeit (sofort, aufgrund maximaler Wartezeit), Kohlenstoffintensität und Betriebskosten.

Im Folgenden wird beschrieben, wie eine Anfrage ausgeführt wird:
1. Eine Quelle, beispielsweise eine Webanwendung, die auf einem Browser läuft, eine native Anwendung oder ein beliebiger anderer Dienst, führt eine Anfrage durch einen Aufruf der entsprechenden Adresse / URL aus.
2. Zusätzlich zu den üblichen Parametern in einer Anfrage wie Authentifizierungstoken, Funktionsparameter und andere Metainformationen, liefert der Anforderer ein spezifisches Profil für die Ausführung des Dienstes mit. Das Profil beinhaltet Gewichtungsanforderungen für die Ausführungszeit (frühester, spätester Zeitpunkt, Häufigkeit, ...), Kosten und CO2-Intensität.
Beispiel: Ein Dienst stellt eine Anfrage für ein Backup einer großen Datenmenge, also beispielsweise einer Datenbank. Grundbedingung ist in unserem Fall, dass das Backup mindestens einmal täglich ausgeführt werden soll, so dass eine Ausführung innerhalb eines Zeitbereichs von 24 Stunden akzeptabel ist. Die Senkung der Kosten für diesen Service hat eine niedrigere Priorität, da der Dienst nur einmal am Tag verwendet wird, möchte das Unternehmen, das ein Backup benötigt, sein CO2-Intensitätsprofil senken.
3. Profilierte Anfragen 105 von einem Client 10 werden, wie bei der Bereitstellung cloudbasierter Dienste üblich, über eine Lastverteilungsvorrichtung (Load Balancer) 204 weitergeleitet. Hier stellt eine erfindungsgemäße Lastverteilungsvorrichtung (Green Load Balancer) 204 zusätzliche Funktionen bereit, um die Anforderungen gemäß einer profilierten Diensteanfrage weiterzuleiten, die vom Client wie folgt bereitgestellt wird:
a) In einer http-Anfrage, (HTTP-Request), 101 wird das Anfrage-Profil innerhalb der Diensteanfrage 105 (im Request Header) bereitgestellt. In diesem Fall ist eine Standardisierung der entsprechenden Header-Parameter wie folgt erforderlich:

| | |
|---|---|
| Zeitangabe für Ausführung: | [sofort, Zeitbereich, spätester Ausführungszeitpunkt] |
| Performanz: | [Wert in %] (Gewichtung) |
| Kosten: | [Wert in %] (Gewichtung) |
| CO2 Verbrauch: | [Wert in %] (Gewichtung) |

b) Für andere Arten von Diensteanfragen, beispielsweise unter Verwendung von gRPC 102, WebSocket 103, oder Internet Protocol IP 104, kann das Anforderungsprofil zusammen mit den Funktionsparametern oder mit einem vorangegangenen Aufruf einer Setup-Funktion gemäß einer standardisierten API-Definition bereitgestellt werden.
4. Die erfindungsgemäße Lastverteilungsvorrichtung (Green Load Balancer) 204 leitet die Anfrage entsprechend der profilierten Anfrage 105 unter Berücksichtigung aktueller regionaler Energieprofile 2012, 2014 und der Stromprognose (Forecast) 2015 abhängig von den Regionen 2018 weiter. Dienste-Energieprofile (aktuelle und prognostizierte Energieprofile) 2014 einzelner Serviceinstanzen 2017 werden durch eine Emissionsabschätzer (Cloud Emission Estimator) CEE 201 bereitgestellt, der eine auf Vorwissen basierende fundierte Schätzung durchführt.
Die Dienste-Energieprofile 2014 beschreiben neben der aktuellen Auslastung auch die Verfügbarkeit von CO2-neutraler (oder wenigstens CO2-armer) Energie sowie die spezifischen CO2-Emissionen abhängig von der Region, in der die Service-Instanz ausgeführt wird. Eine regionenabhängige Vorhersage (Green Energy Forecast) 2015 unterstützt bei der Schätzung des Verbrauchs 2013.
5. Im Falle einer Anfrage auf sofortige Ausführung werden aktuelle regionale Energieprofile berücksichtigt, um eine optimierte Route entsprechend dem angeforderten Profil bereitzustellen.
6. Im Falle einer Anfrage mit möglicher verzögerter Ausführung (d. h. innerhalb eines definierten Zeitbereichs oder bis zu einem bestimmten spätesten Zeitpunkt) bietet der Lastverteiler 204 eine optimierte Routen- und Ausführungszeitbereichsvorhersage an, unter Berücksichtigung der Vorhersage 2015.

Die Vorhersage 2015 enthält für einen Zeitraum (etwa bis zu 24 Stunden) die Menge der lokalen Energieproduktion zusammen mit der entsprechenden zugehörigen CO2-Intensität.

Solche DAten: [77,4GW, 74% CO2-arm, 230g spezifische Emissionen , Deutschland, 6. Oktober, 12:00 Uhr], sind bereits verfügbar.

Die Anfrage wird zur verzögerten Ausführung an den Scheduler weitergeleitet.
7. Wenn der angegebene Zeitbereich für eine Anforderung erreicht ist, fordert der Scheduler die Ausführung vom Lastverteiler gemäß den Zeitbereichseinstellungen in der Anforderung an. Die Ausführung kann durch den Lastverteiler entsprechend den Zeitbereichseinstellungen und den aktuellen regionalen Energieprofilen weiter verzögert werden.
8. Im Falle einer Anforderung zur verzögerten Ausführung sollte der Lastverteiler 204 eine Antwort bereitstellen, die eine globale eindeutige ID für die Anforderung enthält. So kann der Kunde den aktuellen Status einer Anfrage später überprüfen. Asynchrone APIs können als Lösung verwendet werden, um verzögerte Antworten an den Client bereitzustellen.

Die Energieprofilerstellung und der prognostizierter Ausführungsablauf funktionieren wie folgt.

Da die Leistung von Lastausgleichsdiensten von entscheidender Bedeutung ist, müssen aktuelle Energieprojektdateien, die aktuelle Last einzelner Serviceinstanzen und Energieprognosen kontinuierlich gemeldet und lokal beibehalten werden. Um die Performanz weiter zu gewährleisten, sollten der Emissionsabschätzer, Cloud Emission Estimator CEE 201 und Lastverteiler 204 nahe beieinander betrieben werden. Im Folgenden wird der Ausführungsablauf erläutert, um kontinuierliche Aktualisierungen des Emissionsabschätzer Cloud Emission Estimator CEE 201 sicherzustellen.
1. Der Energy Profiler 2024 (lokal) läuft in der Nähe der regionalen Instanz von Diensten 2023 und wird kontinuierlich mit der aktuellen Last (von Diensten und Knoten), aktuellen grünen Energieprofilen (Verfügbarkeit Ökostrom, Kohlenstoffintensität und aktueller Energieverbrauch der Ressource) und einer Energieprognose aktualisiert.

Der Energy Profiler 2024 ist ein Dienst, der aktuelle regionale Energieprofile und eine lokale Prognose für grüne Energie zusammen mit der entsprechenden Kohlenstoffintensität liefert.

Ein Energieprofil beschreibt eine Reihe von Parametern, die den aktuellen Verbrauch und die Erzeugung von Energie zusammen mit der entsprechenden Kohlenstoffintensität der erzeugten Energie beschreiben.
2. Der Energy Profiler 2024 aktualisiert den Emissionsabschätzer (Cloud Emission Estimator CEE) 201 kontinuierlich mit dem aktuellen Wert und der lokalen Prognose.
3. Der Emissionsabschätzer (Cloud Emission Estimator CEE) 201 bietet die dauerhafte Speicherung von Energieprofilen über alle regionalen Knoten hinweg und aktualisiert kontinuierlich Service-Energieprofile, die von Lastverteiler 204 für das ordnungsgemäße Routing, wie oben beschrieben, verwendet werden.

Automatische Erkennung von CO2 Verbesserungen:
Neben der Bereitstellung von Energieprofilen für den Lastverteiler 204 fungiert der Emissionsabschätzer (Cloud Emission Estimator CEE) 201 auch als Kernkomponente für die Planung neuer und die Verbesserung bestehender Infrastrukturen. Der CO2-Fußabdruck der geplanten Infrastruktur kann so abgeschätzt werden und ein Vergleich aller Cloud-Anbieter und ihrer Hyperscale-Regionen hinsichtlich ihrer CO2-Emissionen angelegt werden.

Für die vorhandene Infrastruktur sammelt der Emissionsabschätzer (Cloud Emission Estimator, CEE) 201 aktiv Cloud-Ressourcendaten, um Analysen durchzuführen. Diese Analyse schafft Transparenz, die bessere Entscheidungen ermöglicht. Darüber hinaus können Cloud-Architekten auf Basis der automatisierten Analyse intelligente Vorschläge für mögliche Verbesserungen des CO2-Fußabdrucks ihrer Ressourcen unterbreitet werden (z. B. in Form von Vorschlägen in der Form: "eine Verschiebung einer xyz-Instanz von eu-central-1 nach eu-north-1 verringert Ihre CO2-Emissionen um 21ö"). Die Analyse sowie die Verbesserungs-Vorschläge können dann mit anderen Anwendungen wie dem zentralen IT Asset Management integriert werden.

### Bezugszeichenliste

- 10: Quelle, Internet
- 101: http/https Protokoll
- 102: gRPC Protokoll
- 103: WebSocket Protokoll
- 104: IP, Internet Protokoll
- 105: Anfrage
- 1051: Anfrage-Bedingungen
- 20 201: Emissionsabschätzer CEE
- 2011: Dienst Energie-Profile
- 2012: Regionale Energie-Profile
- 2013: Verbrauchsschätzer
- 2014: aktuelle regionale Energie-Profile
- 2015: Energieverbrauch Vorhersage für Region
- 2016: Verbrauchsschätzer
- 2017: Liste Dienstinstanzen
- 2018: Liste Regionen
- 202: Dienst-Instanzen
- 2021, 2022: Ausführungsknoten, Region
- 2023: Dienst-Instanz 1
- 2024: Energieprofil-Dienste
- 203: Ausführungs-Planer, Scheduler
- 2031: Effizienzprofil (Last, Energieprofil)
- 2032: Vorhersage regionales
- 2023: Service Instanz
- 2024: Energy Profiler
- 204: Lastverteilungsvorrichtung
- 2041, 2042: Kommunikation zwischen Lastverteilung und CEE
- 2043, 2044: Kommunikation zwischen Lastverteilung und Scheduler

## Patentansprüche

1. Verfahren zur energieeffizienten Ausführung eines Dienstes in einem Netz auf einen geteilten Pool von regional verteilten, konfigurierbaren Rechnerressourcen, gesteuert durch eine Lastverteilungsvorrichtung (203)
mit folgenden Schritten:
a) Empfang einer profilierten Diensteanfrage (105) zur Durchführung des Dienstes
b) Abfrage von zur Verfügung stehenden, und für die Ausführung der Diensteanfrage (105) geeigneten, Diensteinstanzen in dem Pool von Rechnerressourcen, und deren zugehörigen Dienst-Energieprofilen (2011), von einem Emissionsabschätzer (CEE, 201)
c) basierend auf der profilierten Diensteanfrage (105), unter Berücksichtigung der ermittelten Dienst-Energieprofile (2011), Berechnung des Energieverbrauchs der Dienstinstanz, festgelegt durch Zeit und Ort der in der Diensteanfrage (105) festgelegten Ausführung des Dienstes und Ermittlung der Ausführung mit einem minimalem Energieverbrauch,
d) Senden eines Ausführungsauftrag zu der im Schritt c ermittelten Dienstinstanz an einen Scheduler (2043) mit den aus den Dienst-Energieprofile (2011) gewonnenen Informationen,
e) Empfang eines Ausführungsauftrags (2044) von dem Scheduler (203), welcher Informationen zur Ausführung der so ausgewählten regionalen Dienstinstanz und zur Zeit der Ausführung beinhaltet zum ermittelten Ausführungszeitpunkt, und
f) Senden des Ausführungsauftrags zur Ausführung an die zur Ausführung ausgewählten Dienstinstanz (2021).

2. Verfahren gemäß Patentanspruch 1,
**dadurch gekennzeichnet, dass**
die profilierte Diensteanfrage (105) Angaben (1051) enthält für die Ausführung des Dienstes, zu mindestens:
- Performanz,
- Kosten,
- Latenz,
- Energieeffizienz,
- Ausführungszeitpunkt oder Ausführungszeitraum, oder
- Priorität der Ausführung.

3. Verfahren gemäß Patentanspruch 1 oder 2,
**dadurch gekennzeichnet, dass**
die in dem Emissionsabschätzer (CEE, 201) vorhandenen Dienst-Energieprofile (2011) entstehen durch
- Sammeln regionaler Energie-Profile (2012), durch
- Abschätzen des benötigten Verbrauchs (2013), auf Basis von
- gespeicherten aktuellen regionalen Energie-Profilen der regional verfügbaren Dienstinstanzen (2014), und
- einer Energieverbrauch-Vorhersage (2015) für die in dem geteilten Pool von konfigurierbaren Rechnerressourcen für die Anfrage zur Verfügung stehenden Ressourcen.

4. Verfahren gemäß einem der vorherigen Patentansprüche,
**dadurch gekennzeichnet, dass**
zum Austausch der Daten und der Definition eines Effizienz-Profils der verwendeten Dienstinstanzen eine einheitliche Datenstruktur verwendet wird, welche folgende Informationen beinhaltet:
- aktuelle Auslastung
- Latenz
- Energieverbrauch
- Ausführungskosten.

5. Verfahren gemäß einem der vorherigen Patentansprüche,
**dadurch gekennzeichnet, dass**
zum Austausch der Daten der profilierten Diensteanfrage (105) eine einheitliche Datenstruktur verwendet wird, welche folgende Informationen beinhaltet:
- Gewichtung der Ausführung
- akzeptierte Antwortzeit
- Betriebskosten
- akzeptierter Energieverbrauch.

6. Verfahren gemäß Patentanspruch 5,
**dadurch gekennzeichnet, dass**
die Informationen per http Anfrage übertragen werden und im Request Header der Diensteanfrage (105) enthalten sind.

7. Verfahren gemäß Patentanspruch 5,
**dadurch gekennzeichnet, dass**
die Informationen in einer API-Definition bereit gestellt werden.

8. Verfahren gemäß einem der vorherigen Patentansprüche,
**dadurch gekennzeichnet, dass**
für eine Diensteanfrage (105) eine eindeutige Identifizierungskennung bereitgestellt und zugewiesen wird.

9. Verfahren gemäß einem der vorherigen Patentansprüche,
**dadurch gekennzeichnet, dass**
die Dienst-Energieprofile (2011) aktualisiert werden, wobei aktuelle Energieprojektdaten (2013), die aktuelle Last einzelner Serviceinstanzen und Energieprognosen kontinuierlich gemeldet bekommen oder abfragen und auch lokal (2025) gespeichert werden.

10. Verfahren gemäß einem der vorherigen Patentansprüche,
**dadurch gekennzeichnet, dass**
der Ausführungsauftrag (2044) eine Region spezifiziert in der sich die zur Ausführung des Dienstes verwendeten verteilten Rechnerressourcen befinden und eine Route zu den Ressourcen.

11. Computerprogrammprodukt geeignet zur Ausführung des Verfahrens gemäß den Merkmalen eines der Patentansprüche 1 bis 10.

12. Lastverteilungsvorrichtung (203) zur energieeffizienten Steuerung der Ausführung eines Dienstes in einem Netz auf einen geteilten Pool von regional verteilten, konfigurierbaren Rechnerressourcen,
a) geeignet und ausgebildet zum Empfang einer profilierten Diensteanfrage (105) zur Durchführung des Dienstes
b) geeignet und ausgebildet zur Abfrage von zur Verfügung stehenden, und für die Ausführung der Diensteanfrage (105) geeigneten, Diensteinstanzen in dem Pool von Rechnerressourcen, und deren zugehörigen Dienst-Energieprofilen (2011), von einem Emissionsabschätzer (CEE, 201)
c) geeignet und ausgebildet zur Berechnung des Energieverbrauchs der Dienstinstanz, basierend auf der profilierten Diensteanfrage (105), unter Berücksichtigung der ermittelten Dienst-Energieprofile (2011), festgelegt durch Zeit und Ort der in der Diensteanfrage (105) festgelegten Ausführung des Dienstes und Ermittlung der Ausführung mit einem minimalem Energieverbrauch,
d) geeignet und ausgebildet zum Senden eines Ausführungsauftrag zu der im Schritt c) ermittelten Dienstinstanz an einen Scheduler (2043) mit den aus den Dienst-Energieprofile (2011) gewonnenen Informationen,
- geeignet und ausgebildet zum Empfang eines Ausführungsauftrags (2044) von dem Scheduler (203), welcher Informationen zur Ausführung der so ausgewählten regionalen Dienstinstanz und zur Zeit der Ausführung beinhaltet zum ermittelten Ausführungszeitpunkt, und
- geeignet und ausgebildet zum Senden des Ausführungsauftrags zur Ausführung an die zur Ausführung ausgewählten Dienstinstanz (2021).

13. Lastverteilungsvorrichtung (203) gemäß Patentanspruch 12, **dadurch gekennzeichnet, dass**
Informationen zur Diensteanfrage (105)
- per http Anfrage übertragen werden und im Request Header enthalten sind, oder
- in einer API-Definition bereitgestellt werden.

14. Lastverteilungsvorrichtung (203) gemäß Patentanspruch 12 oder 13,
**dadurch gekennzeichnet, dass**
für die Diensteanfrage (105) eine eindeutige Identifizierungskennung bereitgestellt und zugewiesen wird.

15. System zur energieeffizienten Ausführung eines Dienstes in einem Netz auf einen geteilten Pool von regional verteilten, konfigurierbaren Rechnerressourcen, gesteuert durch eine Lastverteilungsvorrichtung (203)
mit folgenden Modulen:
a) Lastverteilungsvorrichtung (203),
- geeignet und eingerichtet zum Empfang einer profilierten Diensteanfrage (105) zur Durchführung des Dienstes, sowie
- geeignet und eingerichtet zur Berechnung des Energieverbrauchs einer ermittelten Dienstinstanz basierend auf der profilierten Diensteanfrage (105), unter Berücksichtigung eines ermittelten Dienst-Energieprofile (2011), festgelegt durch Zeit und Ort der in der Diensteanfrage (105) festgelegten Ausführung des Dienstes und Ermittlung der Ausführung mit einem minimalem Energieverbrauch, und
Geeignet und eingerichtet zum Senden eines Ausführungsauftrags zur Ausführung an die zur Ausführung ausgewählten Dienstinstanz (2021),
b) ein Emissionsabschätzer (CEE, 201), geeignet und eingerichtet zur Abfrage und Speicherung von zur Verfügung stehenden, und für die Ausführung der Anfrage geeigneten Diensteinstanzen in dem Pool von Rechnerressourcen, und deren zugehörigen Dienst-Energieprofilen (2011),
d) ein Scheduler (2043), geeignet und eingerichtet zum Empfang eines Ausführungsauftrag zu der Dienstinstanz mit den aus den Dienst-Energieprofile (2011) gewonnenen Informationen, und
geeignet und eingerichtet zum Senden eines Ausführungsauftrags (2044) an die Lastverteilungsvorrichtung (203), die Informationen zur Ausführung der so ausgewählten regionalen Dienstinstanz und zur Zeit der Ausführung beinhaltet zum ermittelten Ausführungszeitpunkt.

16. System gemäß Patentanspruch 15
**dadurch gekennzeichnet, dass**
der Emissionsabschätzer (CEE, 201) Dienst-Energieprofile (2011) speichert, welche ermittelt werden durch
- Sammeln regionaler Energie-Profile (2012),
- Abschätzen des benötigten Verbrauchs (2013), auf Basis von
- gespeicherten aktuellen regionalen Energie-Profilen der regional verfügbaren Dienstinstanzen (2014), und
- einer Energieverbrauch-Vorhersage (2015) für die in dem geteilten Pool von konfigurierbaren Rechnerressourcen für die Anfrage zur Verfügung stehenden Ressourcen.
